# EUROPEAN PATENT SPECIFICATION

(11) **EP 2 502 794 B1**
(45) Date of publication and mention of the grant of the patent: **11.12.2013**
(21) Application number: 11159902.3
(22) Date of filing: 25.03.2011
(51) Int. Cl.: B60R 21/36

(54) **A pedestrian airbag arrangement**
Fußgänger-Airbaganordnung
Agencement d'airbag pour piétons

(43) Date of publication of application: 26.09.2012
(73) Proprietor: Autoliv Development AB, 447 83 Vårgårda (SE)
(72) Inventor: Pucher, Florian, D-85445, Aufkirchen (DE); Zauritz, Ralf, D-83607, Holzkirchen (DE); Hillstrom, Mikael, SE-52491, Herrljunga (SE); Gulde, Alexander, D-85778, Haimhausen (DE)
(74) Representative: Parry, Simon James

(56) References cited:
- EP-A2- 1 577 172
- JP-A- 2006 205 934
- US-A1- 2003 192 731
- US-A1- 2010 252 350

## Description

The present invention relates to a pedestrian airbag arrangement, and more particularly relates to a pedestrian airbag arrangement on a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

An example of a prior art airbag arrangement is found in JP2006-205934 A. This document discloses an airbag arrangement that is stored below a rear end of the hood of a motor vehicle.

It is therefore an object of the present invention to provide an improved pedestrian airbag arrangement.

According to the present invention, there is provided a pedestrian airbag arrangement on motor vehicle having a windscreen, the arrangement comprising: an airbag defining an inflatable volume for the receipt of inflating gas, and a tether; the airbag being configured for deployment upon inflation so as to extend over or across at least part of the windscreen, wherein the tether is outside the inflatable volume and is fixedly connected between the airbag and an anchorage which is fixed relative to part of the motor vehicle adjacent the windscreen, the arrangement being characterised in that the tether is configured to become tensioned between said anchorage and said airbag upon said deployment of the airbag to thereby control inflation of the airbag such that the airbag adopts an inflated configuration defining a cavity between the airbag and the windscreen.

Preferably, the anchorage is mounted to, or is formed integral with part of the hood or bonnet of the motor vehicle.

Advantageously, said part of the hood or bonnet is a rear part of the hood or bonnet adjacent the bottom region of the windscreen.

Conveniently, said tether is configured to control inflation of the airbag upon deployment such that a distal region of the inflated airbag remote from the anchorage is urged against said windscreen by the tension in the tether, with said cavity being defined between said distal region of the airbag and said anchorage.

Preferably, said airbag is configured such that upon inflation a proximal region of the airbag adjacent said anchorage is also urged against said windscreen such that said cavity is defined between said distal and proximal regions.

Advantageously, the inflatable volume of the chamber comprises a plurality of discrete but fluidly connected chambers.

Conveniently, said distal region of the airbag is defined by one of said chambers.

Preferably, said proximal region of the airbag is defined by another of said chambers.

Advantageously, said airbag comprises at least one intermediate chamber between said distal and proximal chambers, the or each said intermediate chamber being spaced from said windscreen by said cavity upon deployment of the airbag.

Preferably, the arrangement comprises an airbag housing within which the airbag is packaged for deployment from the housing upon inflation, the housing defining said anchorage and thus being fixed relative to said part of the motor vehicle and being fixedly connected to said tether.

Conveniently, said housing has an opening through which said airbag deploys upon inflation, and said tether is connected to the housing at a position between the opening and the windscreen of the vehicle.

Preferably, the tether comprises at least one flexible strap, the strap being elongate and having a first end connected to the anchorage and a second end connected to the airbag.

Advantageously, the tether comprises a sheet of flexible material having a first edge connected to the anchorage and a second edge connected to the airbag.

Conveniently, the tether is arranged to contact the outer surface of the windscreen upon deployment of the airbag.

Preferably, the airbag is configured to have an inflated depth, orthogonal to the windscreen, of at least 150 mm upon deployment.

Advantageously, the airbag is configured to have an inflated depth, orthogonal to the windscreen, of no more than 250 mm upon deployment.

Conveniently, the tether is fixedly connected to the anchorage at a first connection, and is fixedly connected to the airbag at a second connection, the tether also being releasably connected to said airbag, between said fixed connections, by a tear seam, the tear seam being configured to rupture during inflation of the airbag and thereby control its deployment.

Preferably, a region of the airbag having said inflated depth is spaced from the windscreen by said cavity upon deployment.

Advantageously, the pedestrian safety arrangement of the present invention is provided on a motor vehicle having a hood-lifting pedestrian safety device.

So that the invention may be more readily understood, and so that further features thereof may be appreciated, embodiments of the invention will now be described by way of example with reference to the accompanying drawings in which:
Figure 1 is a schematic illustration of a basic form of airbag suitable for use in an arrangement according to the present invention;
Figure 2 is a schematic longitudinal cross-sectional view through part of a motor vehicle fitted with a pedestrian airbag arrangement in accordance with an embodiment of the present invention;
Figure 3 is a view, similar to that of figure 1, showing the airbag in combination with a housing a pair of tether straps;
Figure 4 is a schematic illustration showing the airbag in a deployed condition in which it extends generally across the windscreen of the motor vehicle, but with a cavity formed between part of the inflated airbag and the windscreen;
Figure 5 is a cross-sectional view, similar to that of figure 2, showing the deployed airbag of figure 4;
Figure 6 is a view corresponding generally to that of figure 5, but which shows an alternative configuration of the airbag;
Figure 7 is another similar illustration, showing another configuration of the airbag;
Figure 8 shows yet another configuration of the airbag;
Figure 9 is a view corresponding generally to that of figure 3, but which shows the tether straps releasably connected to part of the airbag by optional tear-seams;
Figure 10 shows the airbag and housing in combination with an alternative tether arrangement comprising a flexible sheet instead of the two tethers; and
Figure 11 is a view similar to that of figure 2, but showing another embodiment.

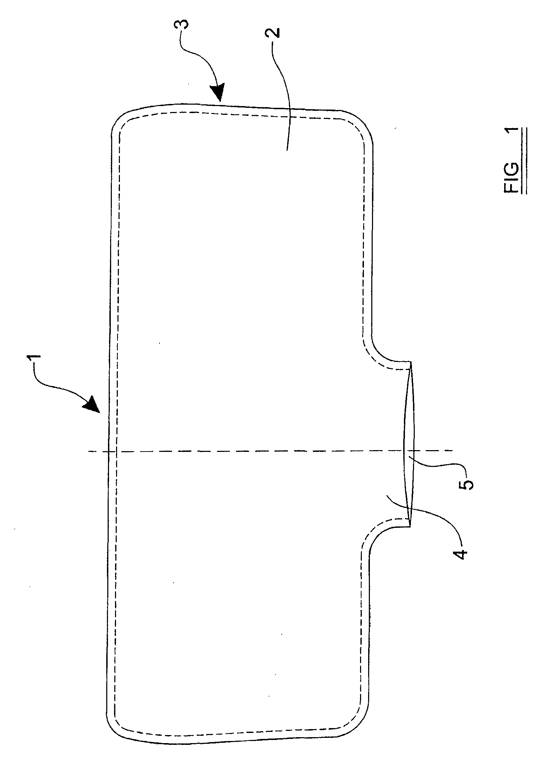

Referring initially to figure 1, there is shown an airbag 1 suitable for use in a pedestrian airbag arrangement in accordance with the present invention. The airbag illustrated is shown in a basic form to clearly illustrate the general concept of the invention. However, as will be explained in more detail below, other more complex airbag configurations may be used instead.

The airbag 1 may be formed from two substantially identical rectangular sheets 2, 3 of flexible material, such as woven fabric, which are superimposed on one another and interconnected around their aligned edges by a peripheral seam 4 to define therebetween a large internal inflatable volume for the receipt of inflating gas from an inflator such as a gas generator. The airbag is formed so as to have an open neck region 4 defining a gas inlet aperture 5 for connection to the inflator.

As will be appreciated by those of skill in the art of airbag manufacture, although the airbag 1 has been described above as being formed from two separate sheets 2, 3 of flexible material, it is envisaged that in variants of the invention the airbag could be formed from a single sheet of flexible material, the sheet being folded in half to create two superimposed layers which can then be interconnected by a peripheral seam in an otherwise similar manner to that described above with reference to figure 1. It is also envisaged that in some embodiments the two sheets 2, 3 could be woven simultaneously via a so-called "one-piece weaving" technique known *per se* in which the warp and weft yarns forming the two layers are interwoven in selected areas to form an interconnecting seam which is integral to the woven structure of the two sheets.

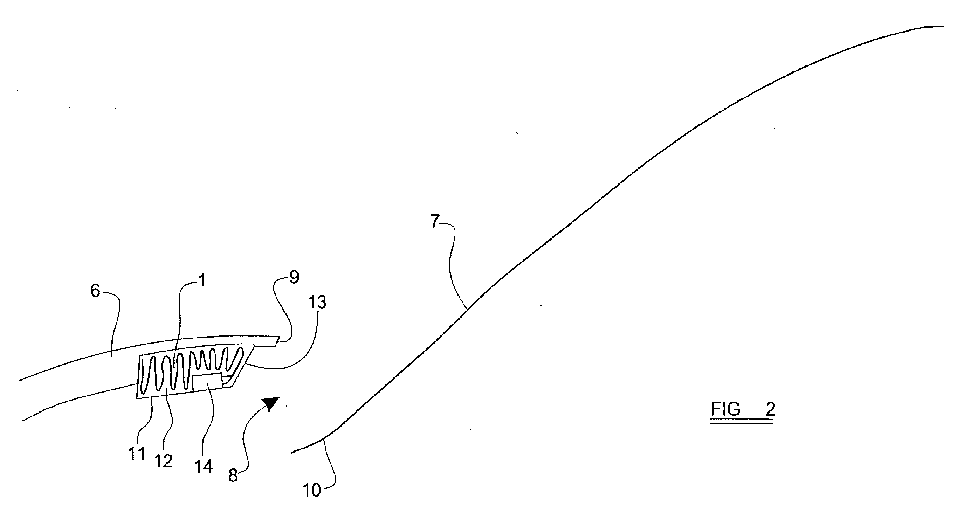

Figure 2 shows the rear part of a hood or bonnet 6 (hereafter simply referred to as the hood), and the windscreen 7 of a motor vehicle fitted with the pedestrian airbag arrangement of the present invention. It is envisaged that the pedestrian airbag arrangement of the present invention will often be fitted to motor vehicles in combination with a hood-lifting pedestrian protection mechanism of a type known *per se*, in which the rear part of the hood is lifted, for example by inflating bellows or airbags beneath the hood, in anticipation of a likely impact with a pedestrian so as to move the hood away from the vehicle's engine. Figure 2 thus shows the hood 6 having been lifted by such a mechanism such that a small space 8 is defined between the rear edge 9 of the hood and the scuttle region 10 along the bottom edge of the windscreen 7. It is envisaged that the hood will be lifted in this way either immediately prior to, or substantially simultaneously with actuation of the pedestrian airbag arrangement.

An airbag housing 11 is either mounted to the rear part of the hood 6, or is formed integrally with the rear part of the hood. Figure 2 shows the housing provided beneath the upper surface of the hood 6 such that the housing is normally hidden from view beneath the hood. The housing 11 defines a small inner chamber 12 within which the airbag 1 is initially packed as shown and has an opening 13 which is initially closed, for example by a rupturable door or seal. An inflator, such as a gas generator 14 is provided within the housing and is fluidly connected to the gas inlet 5 of the airbag. As will be appreciated, upon actuation of the gas generator 14, a large volume of inflating gas is very quickly directed into the interior volume of the airbag 1 which thus inflates the airbag so that it deploys from the housing, through the opening 13 and towards the windscreen 7.

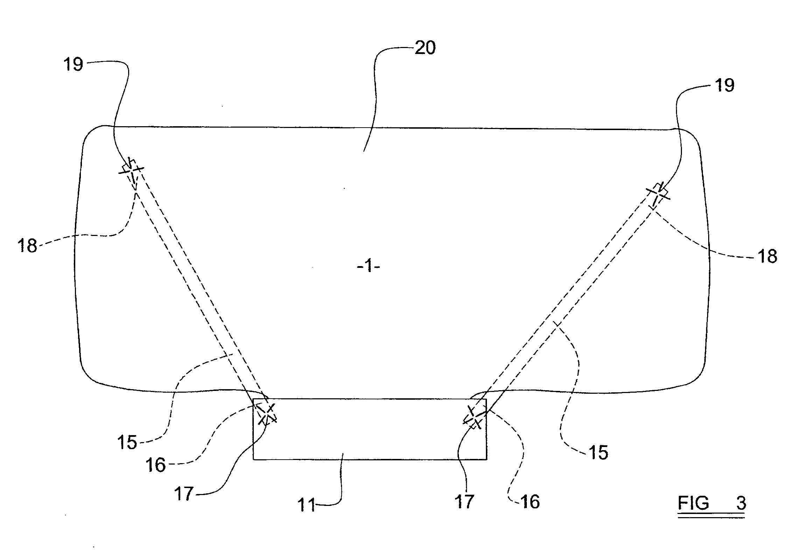

Figure 3 shows the airbag 1 prior to being packed within the housing 11, as viewed from above. A tether arrangement is shown, which in this embodiment comprises a pair of elongate tether straps 15. Each tether strap 15 has a proximal end 16 which is fixedly connected at 17 to the housing 11, and a distal end 18 which is fixedly connected to the lower sheet or layer of the airbag at 19. The housing 11 thus forms a secure anchorage for the distal ends 18 of the straps 15, the anchorage being fixed relative to the structure of the hood 6. The straps 15 are thus both connected between the housing and a distal part 20 of the airbag 1 (relative to the housing 11) and are located outside and beneath the interior volume of the airbag. In the arrangement illustrated in figure 3, each strap 15 is connected to a respective end part of the housing 11 and extends outwardly from the housing towards a connection 19 in a respective distal corner of the airbag. As will be appreciated, when the airbag 1 is folded and/or rolled for packaging within the housing 11, the straps will be packaged up with the airbag inside the housing.

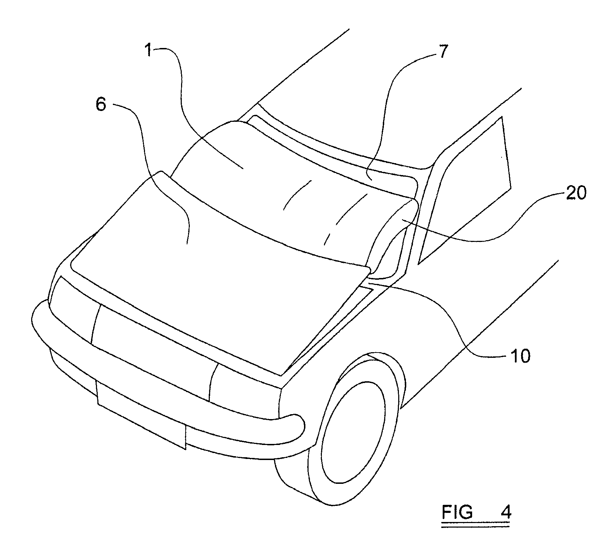

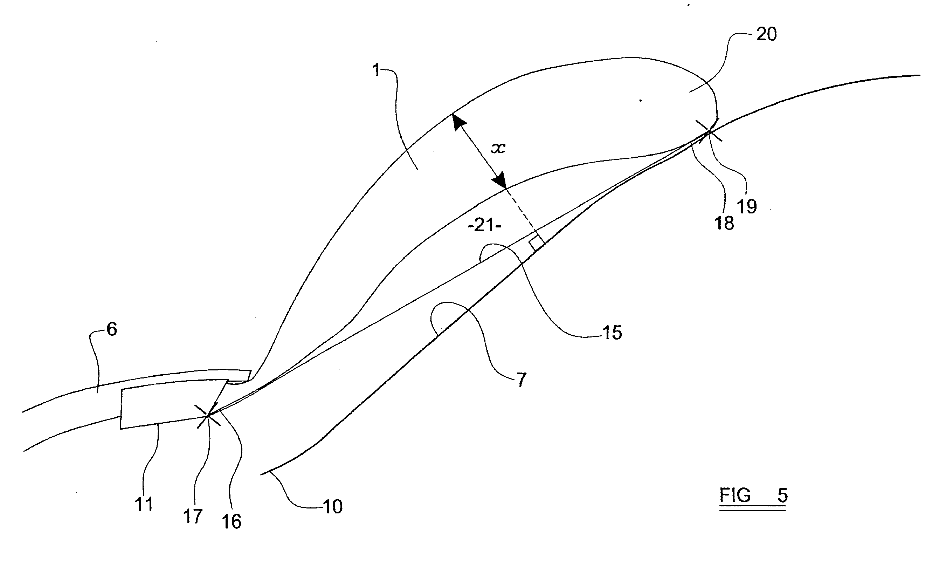

Turning now to consider figures 4 and 5, the airbag 1 is shown in a deployed and fully inflated condition in which it extends generally across the entire width of the windscreen 7. As the airbag 1 unfolds and deploys from the housing 11, the straps 15 also unfold. The straps are configured, particularly in terms of their length between their proximal and distal connections 17, 19 to the housing and airbag respectively, to become tensioned as the airbag nears full inflation. Once the straps 15 become tensioned in this manner between the anchorage provided by the housing 11 and the airbag 1 itself, further inflation of the airbag 1 to the fully inflated condition illustrated is controlled by the straps 15 which induce a degree of curvature to the inflated airbag, in a generally concave manner towards the windscreen as illustrated most clearly in figure 5. The straps 15 thus control inflation of the airbag 1 such that the distal region of the airbag 20 is brought into contact with the windscreen along with the distal ends of the straps, and such that the airbag as whole adopts an inflated condition in which a cavity 21 is defined between the airbag 1 and the windscreen. As illustrated most clearly in figure 5, the straps are preferably connected to the housing 11 at their proximal ends 16 at positions on the housing which are located between the opening 13 and the windscreen of the vehicle so as not to impede deployment of the airbag through the opening.

It has been found that the above-mentioned inflation characteristic in which a cavity 21 is defined between the inflated airbag 1 and the windscreen significantly improves the protection afforded to the head of a pedestrian striking the airbag 1. It is thought that this improvement in the level of protection results from the increase in distance through which energy can be absorbed by the airbag. It has also been found that the head of a pedestrian striking the airbag arrangement of the present invention tends to rebound from the airbag to a lesser degree than in the case of more conventional arrangements in which there is no cavity formed between the airbag and the windscreen. Because the proximal ends 16 of the straps 15 are connected to the fixed housing 11, they do not place any strain on the fabric of the airbag 1 which would be the case, for example, if they were to be connected directly to a proximal region of the airbag.

It has also been found to be advantageous to configure the airbag 1 such that it has an inflated depth x, measured substantially orthogonally relative to the windscreen as indicated schematically in figure 5, of between 150 mm and 250 mm, and preferably approximately 200 mm in its substantially fully inflated condition.

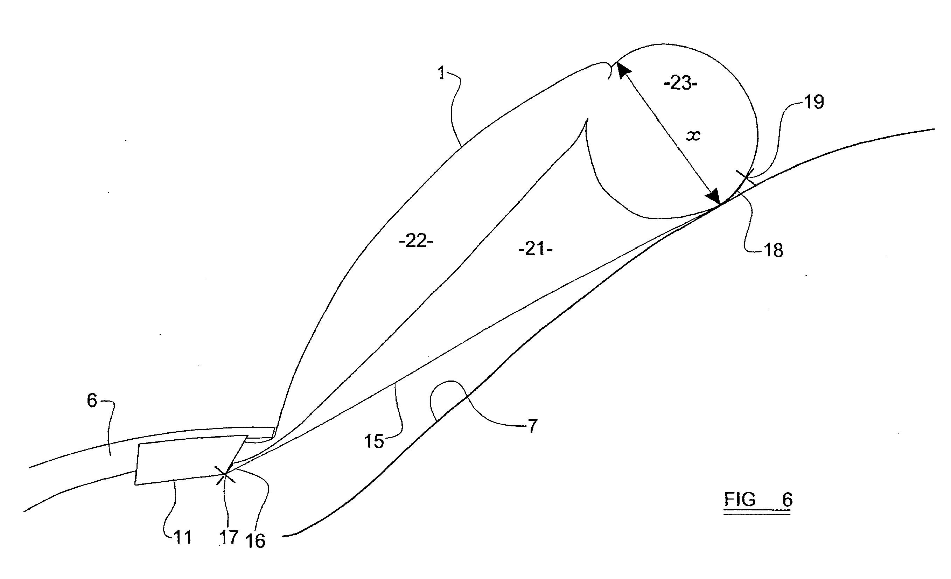

Although the airbag 1 of the embodiment described above has an inflatable volume of the airbag 1 comprises a single chamber, it is envisaged that alternative embodiments may be provided in which the inflatable volume comprises a plurality of discrete by fluidly connected chambers. One such example is illustrated in a deployed condition in figure 6.

As will be noted, the airbag arrangement illustrated in figure 6 comprises two distinct chambers, 22, 23. The first chamber 22 extends away from the housing 11 when inflated and can thus be considered to represent a proximal chamber. The proximal chamber 22 is provided in fluid communication with the second chamber 23 which is spaced from the housing 11 and can thus be considered to represent a distal chamber. In this arrangement, the distal chamber is shown to be generally circular in cross section when inflated and is pulled against the windscreen 7 by the straps 15 as they become tensioned during deployment of the airbag. It is proposed that in this arrangement the distal chamber 23 will have an inflated depth x of between 200 mm and 250 mm, and that the distal chamber 23 will be deeper than the proximal chamber 22 when the airbag is fully inflated. In this arrangement the cavity 21 is thus defined between the proximal chamber 22 and the windscreen, and between the distal chamber 23 and the housing 11.

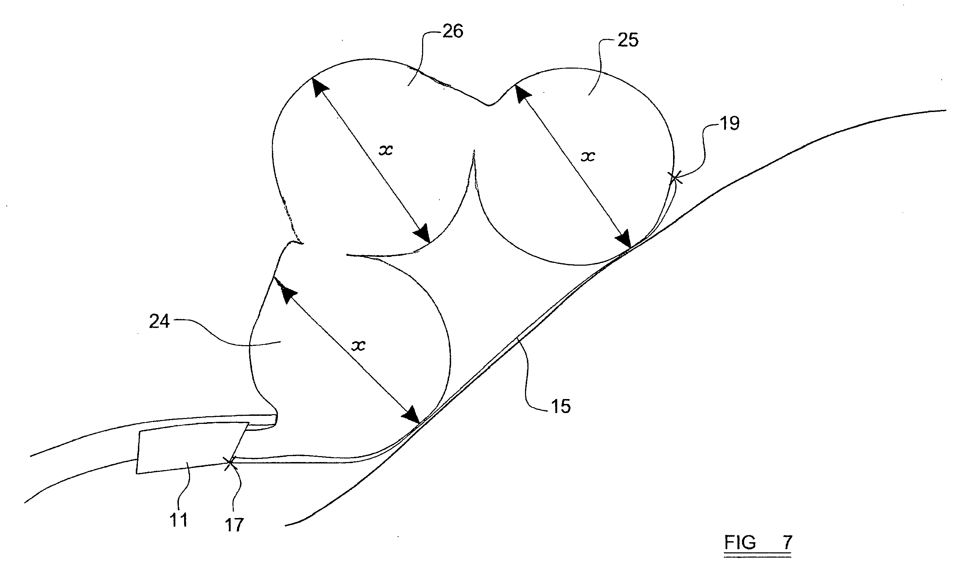

Figure 7 illustrates another possible embodiment in which the airbag 1 is configured to comprise three discrete chambers, namely a proximal chamber 24 connected to the gas generator, a distal chamber 25 and an intermediate chamber 26 located between the proximal and distal chambers and thus interconnecting them. In the arrangement illustrated, the three chambers 24-26 are each generally circular in cross-sectional when fully inflated and each has an inflated depth x in the range of 200 -250 mm. As illustrated, in this arrangement, the distal chamber 25 is pulled against the windscreen 7 as the straps 15 become tensioned, but also the proximal chamber 24 inflates against a lower region of the windscreen. The straps 15 thus become tensioned around the proximal chamber 24 and extend upwardly from the proximal chamber 24 to the distal chamber 25 across the outer surface of the windscreen 7. Again, the straps 15 serve to control inflation of the airbag such that a cavity 21 is defined between the airbag and the windscreen 7; the cavity 21 in this arrangement being defined between the intermediate chamber 26 and the windscreen 7, and between the proximal and distal chambers 24, 25.

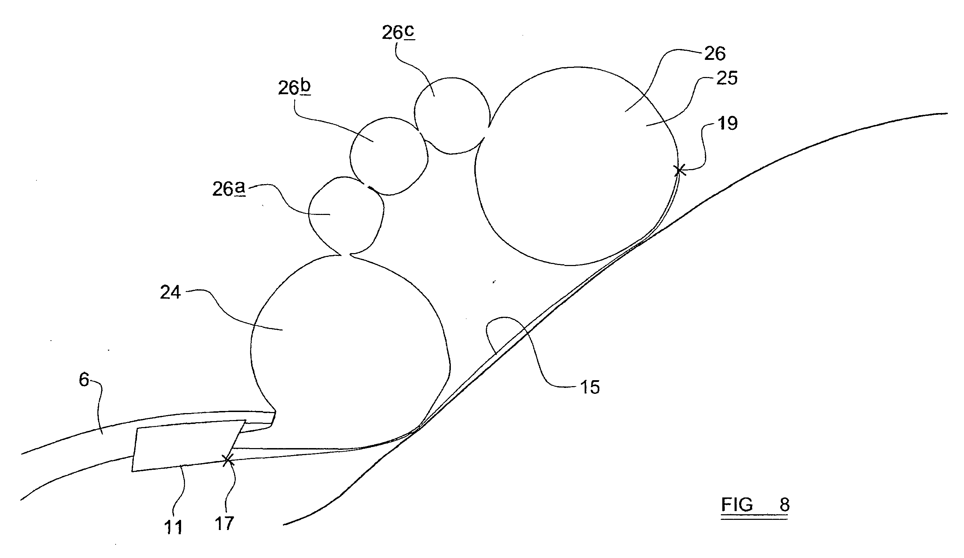

Figure 8 illustrates a modified variant of the arrangement shown in figure 7, in which the single intermediate chamber 26 is replaced with three smaller interconnected intermediate chambers 26a, 26b, 26c.

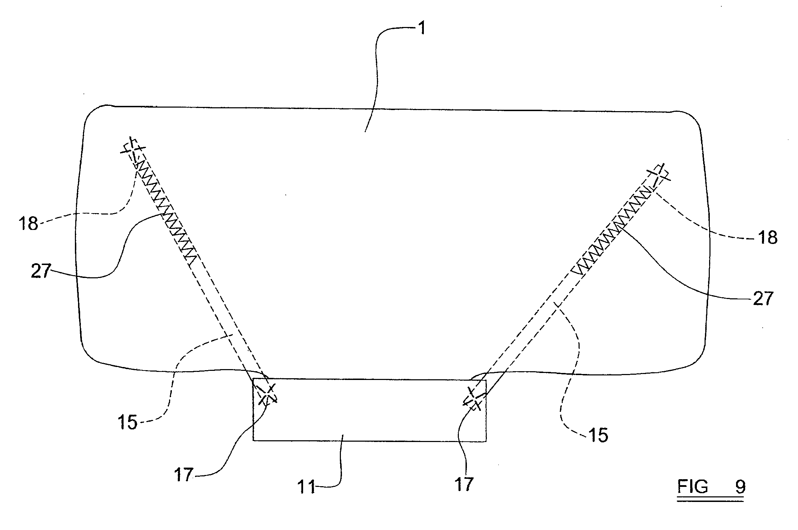

Turning now to consider figure 9, there is illustrated an airbag 1 of similar configuration to the basic airbag shown in figures 1 to 5. In this arrangement however the straps 15, as well as being fixedly connected at their ends to the housing 11 and the distal region 20 of the airbag, are also releasably connected to the airbag by respective tear seams 27. The tear seams 27 are each created in a manner known *per se* in the field of airbags, and are each configured to rupture during inflation of the airbag. As will be noted, the tear seams 27 each run from the distal ends 18 of the straps 15 towards the midpoint of the straps. During inflation of the airbag 1, the straps 15 will thus each become tensioned relatively quickly, between their fixed proximal connections 17 and the beginning of the tear seams 27 at the midpoints of the two straps 15. This early tensioning of the straps 15 serves to urge the airbag against the windscreen at an early stage in its inflation. Continued inflation of the airbag 1 causes the tears seams 27 to rupture in a progressive manner towards the distal ends of the straps, so as to maintain a degree of tension in the straps 15 as the airbag continues to inflate. This ensures that the airbag 1 is pulled against the windscreen throughout its inflation. Eventually, the tear seams 27 will each become entirely ruptured, at which point the deployed condition of the airbag will be generally identical to that illustrated in figures 4 and 5.

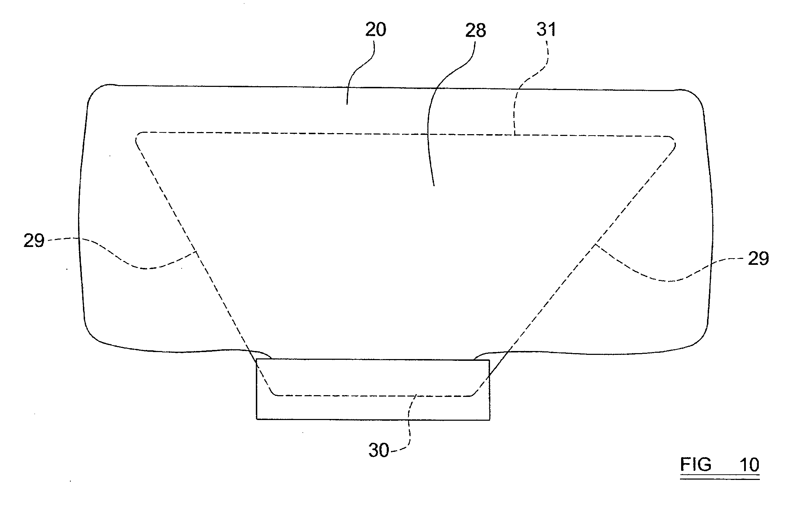

Figure 10 illustrates an airbag 1, provided with an alternative form of tether arrangement in which the tether straps 15 described above have been replaced with a single tether in the form of a sheet 28 of flexible material. The sheet 28 is shown in a trapezoidal configuration in which its two non-parallel end edges 29 each follow a similar line to that of the straps 15 in the previously described embodiments. In this arrangement, it is proposed that the tether sheet 28 will be fixedly connected to the housing along its lower edge 30, and fixedly attached to the distal region 20 of the airbag 1 along its upper edge 31.

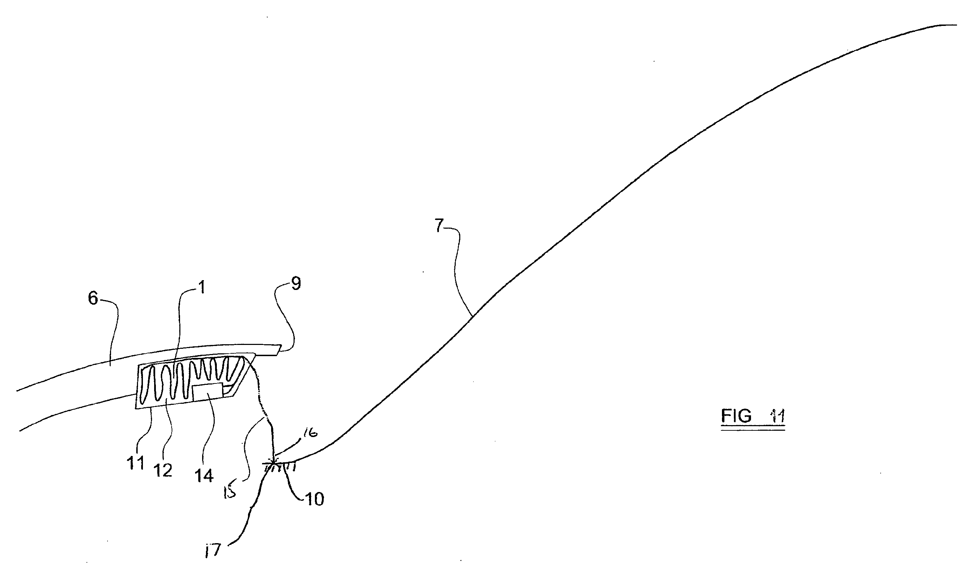

Although the invention has been described above with reference to embodiments in which the proximal ends 16 of the tether straps 15 are fixedly connected to the airbag housing 11 such that the housing forms a secure anchorage for the straps, such a connection is not essential to the invention. For example, figure 11 illustrates a variant in which the tether straps 15 are fixedly connected 17 at their proximal ends 16 not to the housing 11 but instead to the scuttle region 10 of the vehicle structure, adjacent the lower, and forwardmost edge of the windscreen 7. Of course, in this arrangement, the straps 15 must extend from the scuttle 10 to the housing 11 because their distal connections 19 to the airbag 1 are initially located inside the housing with the airbag in its packaged condition illustrated. Nevertheless, upon deployment of the airbag 1 from the housing 11, the straps 15 will still become tensioned in a generally similar manner to the previously described embodiments. As will be appreciated, the sheet tether 28 of the arrangement shown in figure 10 could also be adapted for connection in the manner shown in figure 11.

Furthermore, it is to be noted that in other alternative embodiments, the airbag housing 11 could be mounted to the structure of the motor vehicle adjacent the lower edge of the windscreen rather than to the hood as shown throughout the drawings. For example, the housing could be mounted to the scuttle region 10, or the "cowl" region of the motor vehicle.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the claimed invention.

## Claims

1. A pedestrian airbag arrangement on a motor vehicle having a windscreen (7), the arrangement comprising: an airbag (1) defining an inflatable volume for the receipt of inflating gas, and a tether (15, 28); the airbag (1) being configured for deployment upon inflation so as to extend over or across at least part of the windscreen (7), wherein the tether (15, 28) is outside the inflatable volume and is fixedly connected between the airbag (1) and an anchorage (10, 11) which is fixed relative to part (6) of the motor vehicle adjacent the windscreen (7), the arrangement being **characterised in that** the tether is configured to become tensioned between said anchorage (10, 11) and said airbag (1) upon said deployment of the airbag (1) to thereby control inflation of the airbag (1) such that the airbag adopts an inflated configuration defining a cavity (21) between the airbag (1) and the windscreen (7).

2. A pedestrian airbag arrangement according to claim 1, wherein the anchorage (10, 11) is mounted to, or is formed integral with part of the hood or bonnet (6) of the motor vehicle.

3. A pedestrian airbag arrangement according to claim 2, wherein said part of the hood (6) or bonnet is a rear part of the hood or bonnet adjacent the bottom region (10) of the windscreen (7).

4. A pedestrian airbag arrangement according to any preceding claim, wherein said tether (15, 28) is configured to control inflation of the airbag (1) upon deployment such that a distal region (20) of the inflated airbag remote from the anchorage (10, 11) is urged against said windscreen (7) by the tension in the tether (15, 28), with said cavity (21) being defined between said distal region (20) of the airbag and said anchorage (10, 11).

5. A pedestrian airbag arrangement according to claim 4, wherein said airbag (1) is configured such that upon inflation a proximal region (24) of the airbag adjacent said anchorage (10, 11) is also urged against said windscreen (7) such that said cavity (21) is defined between said distal (20) and proximal (24) regions.

6. A pedestrian airbag arrangement according to any preceding claim, wherein the inflatable volume of the chamber comprises a plurality of discrete but fluidly connected chambers (24, 25, 26).

7. A pedestrian airbag arrangement according to claim 6 as dependent upon claim 4, wherein said distal region (20) of the airbag is defined by one of said chambers (25).

8. A pedestrian airbag arrangement according to claim 7 as dependent upon claim 5, wherein said proximal region of the airbag is defined by another of said chambers (24).

9. A pedestrian airbag arrangement according to claim 8, wherein said airbag comprises at least one intermediate chamber (26) between said distal and proximal chambers (25, 24), the or each said intermediate chamber (26) being spaced from said windscreen (7) by said cavity (21) upon deployment of the airbag.

10. A pedestrian airbag arrangement according to any preceding claim, comprising an airbag housing (11) within which the airbag (1) is packaged for deployment from the housing (11) upon inflation, the housing defining said anchorage and thus being fixed relative to said part (6) of the motor vehicle and being fixedly connected to said tether (15).

11. A pedestrian airbag arrangement according to claim 10, wherein said housing (11) has an opening (13) through which said airbag (1) deploys upon inflation, and wherein said tether (15, 28) is connected to the housing (11) at a position between the opening (13) and the windscreen (7) of the vehicle.

12. A pedestrian airbag arrangement according to any preceding claim, wherein the tether comprises at least one flexible strap (15), the strap being elongate and having a first end (16) connected to the anchorage (10, 11) and a second end (18) connected to the airbag (1).

13. A pedestrian airbag arrangement according to any one of claims 1 to 11, wherein the tether comprises a sheet of flexible material (28) having a first edge (30) connected to the anchorage (10, 11) and a second edge (31) connected to the airbag (1).

14. A pedestrian airbag arrangement according to any preceding claim, wherein the airbag is configured to have an inflated depth, orthogonal to the windscreen, of between 150 mm and 250 mm upon deployment.

15. A pedestrian airbag arrangement according to any preceding claim, wherein the tether is fixedly connected to the anchorage at a first connection (17), and is fixedly connected to the airbag at a second connection (19), the tether also being releasably connected to said airbag (1), between said fixed connections (17, 19), by a tear seam (27), the tear seam (27) being configured to rupture during inflation of the airbag (1) and thereby control its deployment.

## Patentansprüche

1. Fußgänger-Airbaganordnung an einem Kraftfahrzeug mit einer Windschutzscheibe (7), wobei die Anordnung Folgendes umfasst: einen Airbag (1), der ein aufblasbares Volumen zur Aufnahme von Füllgas definiert, und eine Haltevorrichtung (15, 28); wobei der Airbag (1) so eingerichtet ist, dass er sich beim Aufblasen entfaltet, um sich über zumindest einem oder quer über zumindest einen Teil der Windschutzscheibe (7) zu erstrecken, wobei sich die Haltevorrichtung (15, 28) außerhalb des aufblasbaren Volumens befindet und fest zwischen dem Airbag (1) und einer Verankerung (10, 11) verbunden ist, die bezogen auf den Teil (6) des Kraftfahrzeugs angrenzend an die Windschutzscheibe (7) fest ist, wobei die Anordnung **dadurch gekennzeichnet ist, dass** die Haltevorrichtung so eingerichtet ist, dass sie zwischen der Verankerung (10, 11) und dem Airbag (1) beim Entfalten des Airbags (1) gespannt wird, um dadurch das Aufblasen des Airbags (1) zu steuern, sodass der Airbag eine aufgeblasene Gestalt annimmt, die einen Hohlraum (21) zwischen dem Airbag (1) und der Windschutzscheibe (7) definiert.

2. Fußgänger-Airbaganordnung nach Anspruch 1, wobei die Verankerung (10, 11) an einem Teil der Motorhaube (6) des Kraftfahrzeugs montiert oder einteilig damit geformt ist.

3. Fußgänger-Airbaganordnung nach Anspruch 2, wobei der Teil der Motorhaube (6) ein hinterer Teil der Motorhaube angrenzend an den unteren Bereich (10) der Windschutzscheibe (7) ist.

4. Fußgänger-Airbaganordnung nach einem vorhergehenden Anspruch, wobei die Haltevorrichtung (15, 28) so eingerichtet ist, dass sie das Aufblasen des Airbags (1) beim Entfalten so steuert, dass ein distaler Bereich (20) des aufgeblasenen Airbags entfernt von der Verankerung (10, 11) durch die Spannung in der Haltevorrichtung (15, 28) gegen die Windschutzscheibe (7) gedrückt wird, wobei der Hohlraum (21) zwischen dem distalen Bereich (20) des Airbags und der Verankerung (10, 11) definiert ist.

5. Fußgänger-Airbaganordnung nach Anspruch 4, wobei der Airbag (1) so eingerichtet ist, dass beim Aufblasen ein proximaler Bereich (24) des Airbags angrenzend an die Verankerung (10, 11) ebenfalls an die Windschutzscheibe (7) gedrückt wird, sodass der Hohlraum (21) zwischen dem distalen (20) und proximalen (24) Bereich definiert ist.

6. Fußgänger-Airbaganordnung nach einem vorhergehenden Anspruch, wobei das aufblasbare Volumen der Kammer eine Vielzahl einzelner, jedoch fluidmäßig verbundener Kammern (24, 25, 26) umfasst.

7. Fußgänger-Airbaganordnung nach Anspruch 6, wenn abhängig von Anspruch 4, wobei der distale Bereich (20) des Airbags von einer der Kammern (25) definiert ist.

8. Fußgänger-Airbaganordnung nach Anspruch 7, wenn abhängig von Anspruch 5, wobei der proximale Bereich des Airbags durch eine weitere der Kammern (24) definiert ist.

9. Fußgänger-Airbaganordnung nach Anspruch 8, wobei der Airbag mindestens eine Zwischenkammer (26) zwischen der distalen und proximalen Kammer (25, 24) umfasst, wobei die oder jede Zwischenkammer (26) beim Entfalten des Airbags von der Windschutzscheibe (7) durch den Hohlraum (21) beabstandet ist.

10. Fußgänger-Airbaganordnung nach einem vorhergehenden Anspruch, die ein Airbaggehäuse (11) umfasst, in dem der Airbag (1) untergebracht ist, um sich beim Aufblasen aus dem Gehäuse (11) heraus zu entfalten, wobei das Gehäuse die Verankerung definiert und deshalb bezogen auf den Teil (6) des Kraftfahrzeugs fest ist und fest mit der Haltevorrichtung (15) verbunden ist.

11. Fußgänger-Airbaganordnung nach Anspruch 10, wobei das Gehäuse (11) eine Öffnung (13) aufweist, durch die sich der Airbag (1) beim Aufblasen entfaltet, und wobei die Haltevorrichtung (15, 28) mit dem Gehäuse (11) an einer Stelle zwischen der Öffnung (13) und der Windschutzscheibe (7) des Fahrzeugs verbunden ist.

12. Fußgänger-Airbaganordnung nach einem vorhergehenden Anspruch, wobei die Haltevorrichtung mindestens ein flexibles Band (15) umfasst, wobei das Band länglich ist und ein erstes Ende (16) aufweist, das mit der Verankerung (10, 11) verbunden ist, und ein zweites Ende (18), das mit dem Airbag (1) verbunden ist.

13. Fußgänger-Airbaganordnung nach einem der Ansprüche 1 bis 11, wobei die Haltevorrichtung ein Flächengebilde aus flexiblem Material (28) umfasst, das einen ersten Rand (30) aufweist, der mit der Verankerung (10, 11) verbunden ist, und einen zweiten Rand (31), der mit dem Airbag (1) verbunden ist.

14. Fußgänger-Airbaganordnung nach einem vorhergehenden Anspruch, wobei der Airbag so eingerichtet ist, dass er eine Tiefe im aufgeblasenen Zustand senkrecht zur Windschutzscheibe von zwischen 150 mm und 250 mm beim Entfalten aufweist.

15. Fußgänger-Airbaganordnung nach einem vorhergehenden Anspruch, wobei die Haltevorrichtung an einer ersten Verbindungsstelle (17) fest mit der Verankerung verbunden ist und an einer zweiten Verbindungsstelle (19) fest mit dem Airbag verbunden ist, wobei die Haltevorrichtung zwischen den festen Verbindungen (17, 19) über eine Reißnaht (27) auch lösbar mit dem Airbag (1) verbunden ist, wobei die Reißnaht (27) so eingerichtet ist, dass sie während des Aufblasens des Airbags (1) reißt und dadurch seine Entfaltung steuert.

## Revendications

1. Agencement d'airbag pour piétons sur un véhicule à moteur présentant un pare-brise (7), l'agencement comprenant : un airbag (1) définissant un volume gonflable pour la réception de gaz de gonflage, et une fixation (15, 28) ; l'airbag (1) étant configuré pour se déployer lors du gonflage de façon à s'étendre sur ou en travers d'au moins une partie du pare-brise (7), dans lequel la fixation (15, 28) est à l'extérieur du volume gonflable et est reliée fixement entre l'airbag (1) et un ancrage (10, 11) qui est fixe par rapport à la partie (6) du véhicule à moteur adjacente au pare-brise (7), l'agencement étant **caractérisé en ce que** la fixation est configurée pour passer à un état tendu entre ledit ancrage (10, 11) et ledit airbag (1) lors dudit déploiement de l'airbag (1) pour contrôler ainsi le gonflage de l'airbag (1) de sorte que l'airbag adopte une configuration gonflée définissant une cavité (21) entre l'airbag (1) et le pare-brise (7).

2. Agencement d'airbag pour piétons selon la revendication 1, dans lequel l'ancrage (10, 11) est monté sur, ou est formé d'un seul tenant avec une partie du capot (6) du véhicule à moteur.

3. Agencement d'airbag pour piétons selon la revendication 2, dans lequel ladite partie du capot (6) est une partie arrière du capot adjacente à la zone inférieure (10) du pare-brise (7).

4. Agencement d'airbag pour piétons selon une quelconque revendication précédente, dans lequel ladite fixation (15, 28) est configurée pour contrôler le gonflage de l'airbag (1) lors du déploiement de sorte qu'une zone distale (20) de l'airbag gonflé éloignée de l'ancrage (10, 11) est pressée contre ledit pare-brise (7) par la tension dans la fixation (15, 28), ladite cavité (21) étant définie entre ladite zone distale (20) de l'airbag et ledit ancrage (10, 11).

5. Agencement d'airbag pour piétons selon la revendication 4, dans lequel ledit airbag (1) est configuré de sorte que lors du gonflage une zone proximale (24) de l'airbag adjacente audit ancrage (10, 11) est également pressée contre ledit pare-brise (7) de sorte que ladite cavité (21) est définie entre lesdites zones distale (20) et proximale (24).

6. Agencement d'airbag pour piétons selon une quelconque revendication précédentes, dans lequel le volume gonflable de la chambre comprend une pluralité de chambres (24, 25, 26) distinctes mais en liaison fluidique.

7. Agencement d'airbag pour piétons selon la revendication 6, quand elle dépend de la revendication 4, dans lequel ladite zone distale (20) de l'airbag est définie par l'une desdites chambres (25).

8. Agencement d'airbag pour piétons selon la revendication 7, quand elle dépend de la revendication 5, dans lequel ladite zone proximale de l'airbag est définie par une autre desdites chambres (24).

9. Agencement d'airbag pour piétons selon la revendication 8, dans lequel ledit airbag comprend au moins une chambre intermédiaire (26) entre lesdites chambres distale et proximale (25, 24), ladite ou chacune desdites chambre(s) intermédiaire(s) (26) étant espacée(s) dudit pare-brise (7) par ladite cavité (21) lors du déploiement de l'airbag.

10. Agencement d'airbag pour piétons selon une quelconque revendication précédente, comprenant un boîtier d'airbag (11) dans lequel l'airbag (1) est emballé pour le déploiement depuis le boîtier (11) lors du gonflage, le boîtier définissant ledit ancrage et étant donc fixe par rapport à ladite partie (6) du véhicule à moteur et étant relié fixement à ladite fixation (15).

11. Agencement d'airbag pour piétons selon la revendication 10, dans lequel ledit boîtier (11) présente une ouverture (13) à travers laquelle ledit airbag (1) se déploie lors du gonflage, et dans lequel ladite fixation (15, 28) est reliée au boîtier (11) à un emplacement entre l'ouverture (13) et le pare-brise (7) du véhicule.

12. Agencement d'airbag pour piétons selon une quelconque revendication précédente, dans lequel la fixation comprend au moins une sangle flexible (15), la sangle étant allongée et présentant une première extrémité (16) reliée à l'ancrage (10, 11) et une seconde extrémité (18) reliée à l'airbag (1).

13. Agencement d'airbag pour piétons selon l'une quelconque des revendications 1 à 11, dans lequel la fixation comprend une feuille de matériau flexible (28) présentant un premier bord (30) relié à l'ancrage (10, 11) et un second bord (31) relié à l'airbag (1).

14. Agencement d'airbag pour piétons selon une quelconque revendication précédente, dans lequel l'airbag est configuré pour présenter une profondeur à l'état gonflé, perpendiculaire au pare-brise, située entre 150 mm et 250 mm lors du déploiement.

15. Agencement d'airbag pour piétons selon une quelconque revendication précédente, dans lequel la fixation est reliée fixement à l'ancrage à un premier point de liaison (17), et est reliée fixement à l'airbag à un second point de liaison (19), la fixation étant également reliée de manière amovible audit airbag (1), entre lesdits points de liaison fixes (17, 19), par une couture de rupture (27), la couture de rupture (27) étant configurée pour rompre pendant le gonflage de l'airbag (1) et contrôler ainsi son déploiement.
